# EUROPEAN PATENT APPLICATION

(11) **EP 4 528 422 A1**
(43) Date of publication of application: **26.03.2025**
(21) Application number: 24199737.8
(22) Date of filing: 11.09.2024
(51) Int. Cl.: G06F 1/16, G06F 3/02, H01H 13/705

(54) **KEY INPUT DEVICE**

(30) Priority: 25.09.2023 JP 2023159325
(71) Applicant: CASIO COMPUTER CO., LTD., Shibuya-ku, Tokyo 151-8543 (JP)
(72) Inventor: Mori, Masaki, Hamura-shi, Tokyo, 205-8555 (JP)
(74) Representative: Grünecker Patent- und Rechtsanwälte PartG mbB

(57) **Abstract**

A key input device (1) includes keys (14) and a member (10) having surfaces (102A, 102B, 102C, 102D, 102E) parallel to each other, the surfaces each having at least one first through hole (101) among first through holes (101). The keys are inserted to the corresponding first through holes. The member has a first end side, a second end side, a third end side, and a fourth end side, the first end side being opposite the second end side, the third end side being perpendicular to the first end side and opposite the fourth end side. The surfaces of the member are flat from the first end side toward the second end side. The member has a step between a surface on the third end side and a surface on the fourth end side among the surfaces.

## Description

### TECHNICAL FIELD

The present disclosure relates to a key input device.

### DESCRIPTION OF RELATED ART

There is known a key input device with key tops arranged on a surface. For example, JP S60-141035U discloses a keyboard including: an operation panel that has a flat panel part and a sloping panel part; pressing button switches as key tops arranged on the flat panel part toward the sloping panel part; and an elastic sheet that supports the pressing button switches.

### SUMMARY

According to an aspect of the present disclosure, there is provided a key input device including: keys; and a member having surfaces parallel to each other, the surfaces each having at least one first through hole among first through holes, wherein the keys are inserted to the corresponding first through holes; the member has a first end side, a second end side, a third end side, and a fourth end side, the first end side being opposite the second end side, the third end side being perpendicular to the first end side and opposite the fourth end side; the surfaces of the member are flat from the first end side toward the second end side; and the member has a step between a surface on the third end side and a surface on the fourth end side among the surfaces.

### BRIEF DESCRIPTION OF THE DRAWINGS

The accompanying drawings are not intended as a definition of the limits of the invention but illustrate embodiments of the invention, and together with the general description given above and the detailed description of the embodiments given below, serve to explain the principles of the invention, wherein:
FIG.1 is a plan view of a calculator according to an embodiment of the present disclosure;
FIG.2 is a cross-sectional view of the calculator along the II - II line in FIG.1;
FIG.3 is a cross-sectional view of the calculator along the III-III line in fIG.1;
FIG.4 is a view of the back surface of a top casing;
FIG.5 is a perspective view of the back surface of the top casing and nonwoven fabric sheets; and
FIG.6 is a cross-sectional view of the calculator showing contact positions of the key tops in the row direction.

### DETAILED DESCRIPTION

Hereinafter, an embodiment of the present disclosure is described in detail with reference to the figures. The scope of the present disclosure is not limited to the illustrated examples.

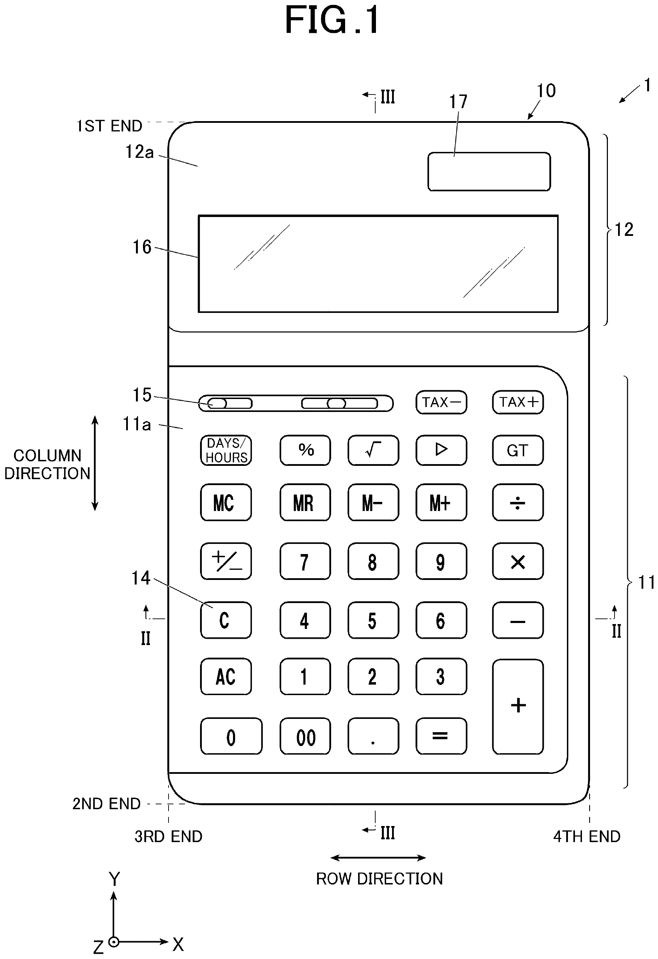

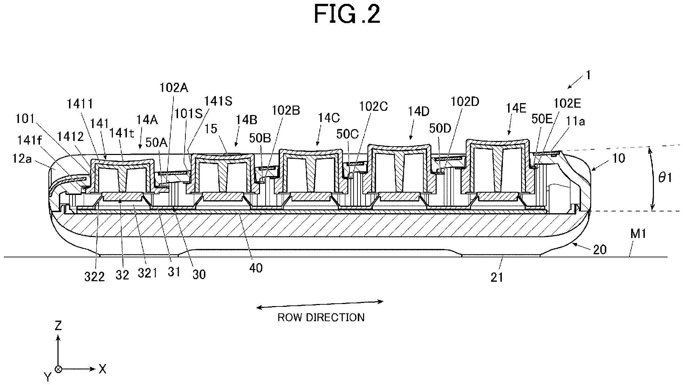

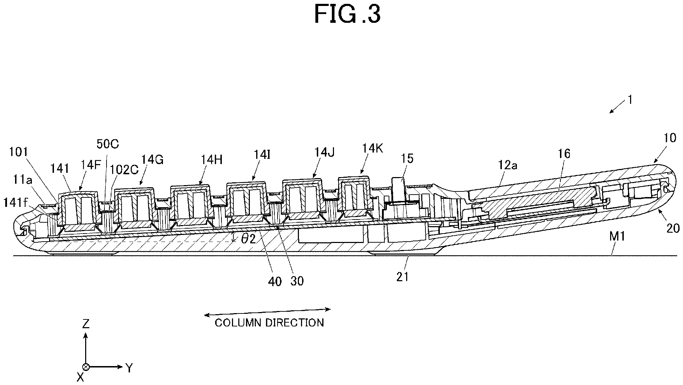

First, the overall configuration of a calculator (electronic desk calculator) 1 as an electronic device in this embodiment is described with reference to FIG.1 to FIG.4. FIG.1 is a plan view of the calculator 1 in this embodiment. FIG.2 is a cross-sectional view of the calculator 1 along the II-II line in FIG.1. FIG.3 is a cross-sectional view of the calculator 1 along the III-III line in FIG.1.

The calculator 1 is a small calculator that receives key inputs by a user and performs calculations using an internal electronic circuit. The calculator 1 in this embodiment has key tops the heights of which are sloped stepwise in the lateral direction when viewed by the user. The calculator 1 is thus designed such that the key tops fit the dominant hand and fingers of the user. The components of the calculator 1 related to key inputs constitute a key input device.

As shown in FIG.1 to FIG.3, the calculator 1 includes a top casing 10 and a bottom casing 20 as a casing (member) and is placed on a placement surface M1, such as a table. In FIG.1 to FIG.3, three-dimensional axes of X, Y, and Z are shown. The +Z direction is the vertical upward direction with respect to the placement surface M1. The placement surface M1 is a two-dimensional XY surface. On the placement surface M1, the X-axis corresponds to the lateral direction (short-side direction) of the calculator 1, and the Y-axis corresponds to the longitudinal direction (long-side direction) of the calculator 1.

The top casing 10 is the upper side (+Z direction side) of the calculator 1 and is made of resin, for example. The top casing 10 of the calculator 1 includes a key input section 11 and a display section 12. The key input section 11 includes multiple keys 14 and a selector switch 15.

The keys 14 include numeric keys, operation keys, and function keys, for example. The numeric keys include keys for inputting numbers [00], [0] to [09] and for inputting the decimal point [.], for example. The operation keys include keys to be used in four basic arithmetic operations, such as keys for inputting operators of [+] (addition), [-] (subtraction), [×] (multiplication), and [÷] (division), and a key for inputting [=] (execution of operation), for example. The function keys include an all-clear key [AC], a clear key [C], memory keys [MC], [MR], [M-], and [M+], a square-root key [V], and a percentage key [%], for example.

The selector switch 15 is a slide switch that includes a rounding selector and a decimal selector, for example. The rounding selector is a switch for specifying how to calculate numbers below the decimal point. The decimal selector is a switch for specifying the digits below the decimal point.

As shown in FIG.1, the exterior of the calculator 1 has a substantially rectangular shape when viewed from the top surface (+Z direction side). The key input section 11 is provided on the -Y direction side of the top casing 10 when the calculator 1 is viewed from the top surface. The display section 12 is provided on the +Y direction side of the top casing 10.

The display section 12 includes a display 16 and a solar panel 17 on the casing surface 12a. The casing surface 12a is a region on the +Y direction side of the top surface of the casing. The display 16 is provided on the -Y direction side of the casing surface 12a. The display 16 has an oblong rectangular display screen, for example. The long side of the display screen of the display 16 extends from the third end side (the end of the casing in the -X direction) toward the fourth end side (the end of the casing in the +X direction) opposite the third end. The solar panel 17 is provided on the +Y direction side of the casing surface 12a. The solar panel 17 is an electronic component that converts light energy into electric energy (power) by using the photovoltaic effect.

The key input section 11 includes the keys 14 on the casing surface 11a. The casing surface 11a is a region on the -Y direction side of the top surface of the casing. In the key input section 11, the keys 14 are arranged substantially in a matrix from the third end side toward the fourth end side and from the first end side (the end of the casing in the +Y direction) toward the second end side (the end of the casing in the -Y direction) of the casing. The keys 14 each have a key top 141. The key top 141 has a touch surface 141t at the top surface of the key top 141. The touch surface 141t is a surface to be pressed by a finger of the user for key input. Regarding the keys 14, the direction parallel to the upper side/lower side of the key input section 11 is referred to as the row direction (FIG.1, FIG.2), and the direction parallel to the left side/right side of the key input section 11 is referred to as the column direction (FIG.1, FIG.3), for example. The keys 14 are arranged at predetermined intervals (key pitches) in the row direction and in the column direction, respectively.

As shown in FIG.2 and FIG.3, the bottom casing 20 is fitted to the top casing 10 from the bottom side (the -Z direction side) and has feet 21. The bottom casing 20 is made of resin, for example. The bottom surface of the bottom casing 20 except the feet 21 (the casing bottom surface) is formed to be parallel to the placement surface M1. The feet 21 is made of an elastic body, such as rubber. The feet 21 is in contact with the placement surface M1 when the calculator 1 is placed on the placement surface M1. The feet 21 prevent the placed calculator 1 from slipping and muffle noise when the calculator 1 is placed.

As shown in FIG.2, the casing surface 11a of the key input section 11 is at a predetermined angle Θ1 to the casing bottom surface (the placement surface M1, a board 40 to be described later) in the row direction from the third end side toward the fourth end side. As shown in FIG.3, the casing surface 11a is at a predetermined angle Θ2 to the casing bottom surface (the placement surface M1) in the column direction from the second end side toward the first end side.

It is preferable that the angle θ1 be in the range of degrees of 1° to 9°, for example. It is more preferable that the angle Θ1 be in the range of degrees of 1° to 3°. The angle Θ1 is set to 3°, for example. The angle Θ2 is set to 3°, for example.

As shown in FIG.2, the height of the casing surface 11a of the key input section 11 from the placement surface M1 (board 40) decreases from the fourth end side toward the third end side. Thus, the casing surface 11a of the key input section 11 of the calculator 1 slopes to the left. The heights of the touch surfaces 141t of the keys 14 from the casing surface 11a in the +Z direction are substantially uniform. That is, at least part of the touch surfaces 141t of the keys 14 on the fourth end side are higher than at least part of the touch surfaces 141t of the keys 14 on the third end from the placement surface M1.

According to the structure of the calculator 1, when the calculator 1 is used with the left hand of the user (left-handed user), the touch surfaces 141t of the keys 14 fit to the hand and fingers of the user. Thus, the calculator 1 is easy to use and causes less fatigue to the user.

The calculator 1 may be configured such that the height of the casing surface 11a of the key input section 11 from the placement surface M1 (board 40) decreases from the third end side toward the fourth end side, namely such that the casing surface 11a of the key input section 11 of the calculator 1 slopes to the right, on the assumption that the calculator 1 is used with the right hand of the user (right-handed user). That is, at least part of the touch surfaces 141t of the keys 14 on the third end side are higher than at least part of the touch surface 141t of the keys 14 on the fourth end side from the placement surface M1.

On the other hand, regarding the display 16 of the display section 12, the height of the fourth end side of the display screen from the placement surface M1 is not higher than the height of the third end side thereof. In the example shown in FIG.2, the third end side and the fourth end side of the display section 12 are at the same height from the placement surface M1.

As shown in FIG.3, the casing of the calculator 1 is bended at the boundary between the key input section 11 and the display section 12 such that the upper side of the top casing surface is raised. That is, the casing surface 12a including the display section 12 leans to the casing surface 11a including the key input section 11 at a predetermined tilt angle in the +Z direction. Since the casing surface 12a including the display section 12 leans in the column direction, the viewability of the display screen of the display 16 is increased.

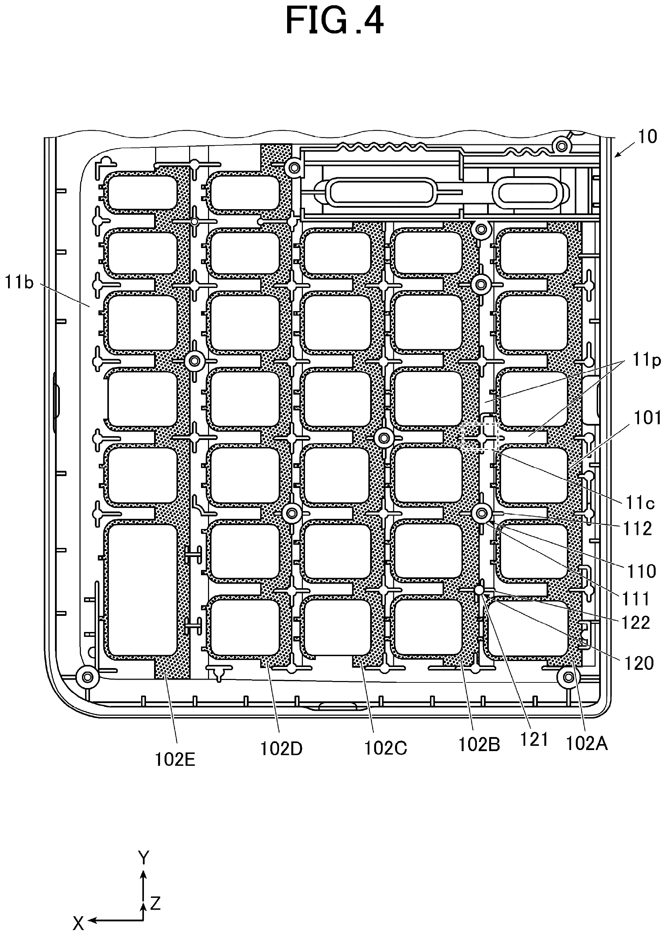

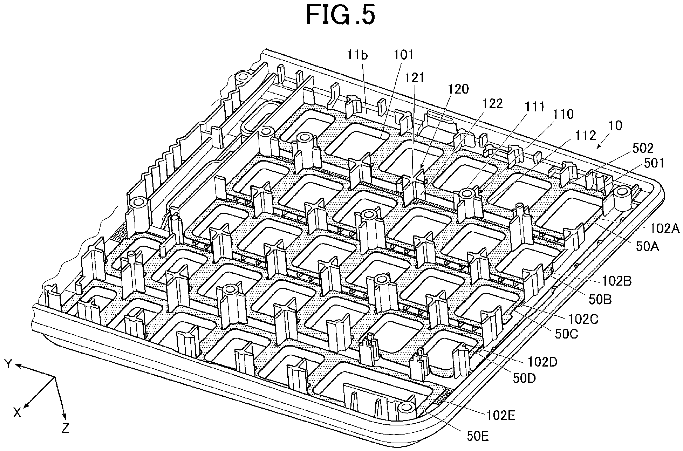

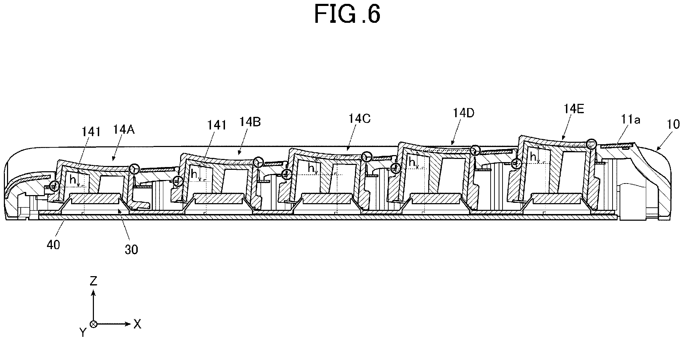

The internal configuration of the calculator 1 is described with reference to FIG.2 to FIG.6. FIG.4 shows the back surface of the top casing 10. FIG.5 is a perspective view of the back surface of the top casing 10 and nonwoven fabric sheets 50A, 50B, 50C, 50D, and 50E. FIG.6 is a cross-sectional view of the calculator 1 showing contact positions of the key tops 141 of the keys 14A to 14E in the row direction.

As shown in FIG.1 to FIG.3, in the casing (the top casing 10 and the bottom casing 20), the calculator 1 includes the display 16, the solar panel 17, the key tops 141, rubber keys 30, the board 40, and nonwoven fabric sheets 50A, 50B, 50C, 50D, and 50E as sheets. The key tops 141 each consist of a base part 1411 and a key-marking part 1412. The base part 1411 is an outside layer of the key top 141. The base part 1411 is made of resin in the background color of letters (key markings) on the touch surface 141t. The key-marking part 1412 is an inside layer of the key top 141. The key-marking part 1411 is made of resin in the color of letters on the touch surface 141t. The key-marking part 1412 is exposed on the touch surface 141t through the base part 1411 to show a letter (key marking). The background color is different from the letter color.

The key top 141 is formed of the base part 1411 and the key-marking part 1412 by two-color molding. By the two-color molding, the letters (key markings) on the touch surfaces 141t are prevented from fading even if the touch surfaces 141t are physically worn by the pressing by the user. The key top 141 may not include the key-marking part 1412 and may be formed by single-color molding.

The key top 141 includes the touch surface 141t and a flange 141f. The key top 141 is positioned such that the touch surface 141t is parallel to the flat surface of the board 40. The flange 141f is a flange-shaped edge part that protrudes in the direction of a plane parallel to the surface of the board 40. After the key top 141 is pressed by the user and moved (stroked) toward the board 40 in the direction perpendicular to the board 40, the key top 141 returns in the reverse direction. When the key top 141 returns, the flange 141f abuts the top casing 10 with the nonwoven fabric sheet 50A, 50B, 50C, 50D or 50E inbetween. The flange 141f thus stops the key top 141. Regarding one key top 141, the height of the flange 141f is uniform from the bottom surface (from the board 40 in the direction perpendicular to the board 40).

On the cross section along the row direction in FIG.2, the keys 14 arranged in the row direction from the third end side toward the fourth end side are referred to as a key 14A, a key 14B, a key 14C, a key 14D, and a key 14E in order. The touch surfaces 141t of the key tops 141 of the keys 14A to 14E are substantially at the same height from the casing surface 11a in the +Z direction. By the angle Θ1, the heights of the touch surfaces 141t of the key tops 141 of the keys 14A to 14E from the flat surface of the board 40 are as follows: key 14E > key 14D > key 14C > key 14B > key 14A.

In the row direction, the difference in heights of the touch surfaces 141t of the key tops 141 of two adjacent keys 14 from the board 40 is substantially the same. In the row direction, the heights of the key tops 141 themselves of the keys 14 in the vertical direction from the flat surface of the board 40 are as follows: key 14E > key 14D > key 14C > key 14B > key 14A. In the row direction, the heights of the flanges 141f themselves of the keys 14 in the vertical direction from the flat surface of the board 40 are as follows: key 14E > key 14D > key 14C > key 14B > key 14A. Thus, the heights of the touch surfaces 141t of the keys 14 from the flat surface of the board 40 change stepwise in the row direction, depending on the angle θ1 of the casing surface 11a.

Here, the column of keys 14 including the key 14A extending in the column direction is referred to as a column A. The column of keys 14 including the key 14B extending in the column direction is referred to as a column B. The column of keys 14 including the key 14C extending in the column direction is referred to as a column C. The column of keys 14 including the key 14D extending in the column direction is referred to as a column D. The column of keys 14 including the key 14E extending in the column direction is referred to as a column E.

In the column-direction cross section in FIG.3, the keys 14 arranged from the second end side toward the first end side are referred to as a key 14F, a key 14G, a key 14H, a key 141, a key 14J, and a key 14K in order. By the angle Θ2, the heights of the touch surfaces 141t of the key tops 141 of the keys 14F to 14K from the placement surface M1 are as follows: key 14K > key 14J > key 141 > key H > key 14G > key 14F.

The rubber key 30 is a substantially plate-shaped member made of elastic material, such as rubber. The rubber key 30 includes a flat surface part 31 and multiple rubber key tops 32. The flat surface part 31 is a flat-shaped base body of the rubber key 30 and is placed on the flat surface of the board 40. The rubber key tops 32 are arranged at positions corresponding to the key tops 141 over the flat surface of the board 40. The rubber key tops 32 are substantially dome-shaped spring parts that receive the pressed key tops 141. The keys 14 each include the key top 141 and the corresponding rubber key top 32.

As shown in FIG.2, the rubber key top 32 includes a connecting part 321 and a support part 322. The connecting part 321 is connected to the bottom end of the key-marking part 1412 of the key top 141. The connecting part 321 receives the pressed key top 141. The support part 322 is connected to the flat surface part 31 and supports the connecting part 321 such that the connecting part 321 is at a predetermined distance from the flat surface of the board 40 toward the top surface in the vertical direction from the flat surface of the board 40. In a case where the key top 141 does not include the key-marking part 1412, the connecting part 321 may be connected to the bottom of the key top 141 instead of the bottom of the key-marking part 1412.

The connecting parts 321 of the rubber key tops 32 are each connected to the corresponding key top 141 such that the moving direction (keystroke direction) of the key top 141 is the vertical direction from the flat surface of the board 40.

In a normal state, the support part 322 holds the connecting part 321 at a distance from the board 40 so that the key top 141, which is mounted on the connecting part 321, is movable when pressed. When the key top 141 is pressed, the connecting part 321 is pressed until being in contact with the board 40. The bottom of the connecting part 321 is provided with a conductive member. When the connecting part 321 is pressed along with the key top 141, the conductive member is brought into contact with an electrode provided on the board 40 to detect the press of the key. By the contact of the conductive member of the connecting part 321 to the electrode of the board 40, electrodes corresponding to the key 14 on the board 40 are electrically connected. Thus, the press of the key 14 is input.

The rubber key tops 32 that correspond to the key tops 141 having the same-sized touch surfaces 141t are made uniform so that the key tops 141 having the same-sized touch surfaces 141t give the same operability (click feeling) when pressed. That is, the rubber key tops 32 that correspond to the key tops 141 having the same-sized touch surfaces 141t are made of the same material and in the same shape and dimensions so that the rubber key tops 32 have substantially the same amount of mass.

The click feeling refers to the feeling of the user when he/she presses the key top 141 and recognizes the restoring force (repulsive force) of the buckled or compressed rubber key top 32, which is made of elastic material.

The board 40 is a printed circuit board (PCB) that supports the keys 14 in the casing. The keys 14, circuit elements, and so forth are mounted on the board 40. The casing surface 11a of the top casing 10 is formed and positioned such that the casing surface 11a is parallel to the flat surface of the board 40 in the column-direction cross section and such that the casing surface 11a slopes to the board 40 at the angle θ1 in the row-direction cross section.

The nonwoven fabric sheet 50A is a nonwoven fabric sheet mounted between a surface 102A of the top casing 10 (described later) and the flanges 141f of the keys 14 including the key 14A in the column A. When the key top 141 returns to its original position by the restoring force of the rubber key top 32 after being pressed, the direct contact of the flange 141f to the surface of the top casing 10 produces a large sound. The nonwoven fabric sheet 50A prevents the direct contact of the flange 141f to the surface 102A of the top casing 10 and absorbs the contact force, thereby reducing contact sounds (keystroke sounds) generated by the returning of the key top 141. Reduction of the keystroke sound means that the volume and pitch of the keystroke sounds does not disturb the user.

Similarly, the nonwoven fabric sheet 50B is a nonwoven fabric sheet mounted between a surface 102B of the top casing 10 (described later) and the flanges 141f of the keys 14 including the key 14B in the column B. The nonwoven fabric sheet 50C is a nonwoven fabric sheet mounted between a surface 102C of the top casing 10 (described later) and the flanges 141f of the keys 14 including the key 14C in the column C. The nonwoven fabric sheet 50D is a nonwoven fabric sheet mounted between a surface 102D of the top casing 10 (described later) and the flanges 141f of the keys 14 including the key 14D in the column D. The nonwoven fabric sheet 50E is a nonwoven fabric sheet mounted between a surface 102E of the top casing 10 (described later) and the flanges 141f of the keys 14 including the key 14E in the column E.

The structure of the top casing 10 is described with reference to FIG.4 and FIG.5. FIG.4 shows the top casing 10 alone. FIG.5 shows the top casing 10 on which the nonwoven fabric sheets 50A to 50E are mounted. As shown in FIG.2 to FIG.4, the casing surface 11a of the top casing 10 has holes 101 as first through holes. The holes 101 are openings corresponding to the key tops 141 of the keys 14. The key tops 141 are inserted through the holes 101. The holes 101 guide the movement of the key tops 141 and expose the touch surfaces 141t on the top surface (substantially toward the +Z direction). The shapes of the holes 101 correspond to the shapes of the touch surfaces 141t. For example, the holes 101 have a rectangle shape with rounded four corners.

As shown in FIG.4 and FIG.5, the top casing 10 includes boss parts 110, rib parts 120, and surfaces 102A, 102B, 102C, 102D, and 102E as one body on a casing surface 11b. The casing surface 11b is the back side (the -Z direction side) of the casing surface 11a. The boss parts 110 and the rib parts 120 as projection parts are provided at crossing regions 11c, not at key pitch regions 11p. The key pitch regions 11p are side regions between the adjacent holes 101 in the X-axis direction or in the Y-axis direction. The crossing regions 11c are regions each including a region (intersection) where the extended regions of the key pitch regions 11p are crossed. That is, each of the boss parts 110 and the rib parts 120 extends over two surfaces among the surfaces 102A to 102E (extend over holes 101 in the row direction).

The boss parts 110 are internal screw parts for screwing the board 40 or the bottom casing 20 to the top casing 10 with not-illustrated external screws. Each of the boss parts 110 includes a boss 111 as a support and ribs 112. The axial direction of the boss 111 (the direction in which the boss 111 protrudes) extends from the casing surface 11b in the vertical direction from the flat surface of the board 40. There are relatively low bosses 111 to be screwed to the board 40 and relatively high bosses 111 to be screwed to the bottom casing 20. The ribs 112 are flat-surface ribs connected to the boss 111 and protrude in radial directions perpendicular to the axial direction of the boss 111. The ribs 112 each protrude from the boss 111 in the directions perpendicular to each other. For example, each of the boss parts 110 has one boss 111 and four ribs 112 connected to the boss 111, and the ribs 112 form a cross shape when viewed from the back side. The ribs 112 extend beyond the crossing region 11c corresponding to the boss part 110 (see the dashed line (virtual line) in FIG.4).

The ribs 112 are arranged to hold the rubber key 30 between the ribs 112 and the board 40. The ribs 112 have a function of reinforcing the boss 111 to prevent the boss 111 from falling and a function of holding and fixing the rubber key 30 between the ribs 112 and the board 40.

The rib parts 120 each include a support 121 and ribs 122. The axial direction of the support 121 extends from the casing surface 11b in the vertical direction from the flat surface of the board 40. There are relatively low supports 121 corresponding to the flat surface of the rubber key 30 and relatively high supports 121 extending beyond the flat surface of the rubber key 30 to position the rubber key 30 against the board 40. The ribs 122 are flat-surface ribs connected to the support 121 and protrude in radial directions perpendicular to the axial direction of the support 121. The ribs 122 each protrude in the directions perpendicular to each other. For example, each of the rib parts 120 has one support 121 and four ribs 122 connected to the support 121, and the ribs 122 form a cross shape when viewed from the back side. The ribs 122 extend beyond the crossing region 11c corresponding to the rib part 120 (see the dashed line (virtual line) in FIG.4).

The ribs 122 are arranged to fix the rubber key 30 or to hold the rubber key 30 between the ribs 122 and the board 40. Thus, the ribs 122 have a function of fixing the rubber key 30 or holding and fixing the rubber key 30 between the ribs 122 and the board 40.

Either a boss part 110 or a rib part 120 is placed on each of the crossing regions 11c on the top casing 10. The positions and the number of boss parts 110 and rib parts 120 (the ratio between the boss parts 110 and the rib parts 120) is appropriately determined in consideration of the shapes and weight balance of the components of the calculator 1, weight saving of the calculator 1, and secure fastening of the casing.

As shown in FIG.2 to FIG.4, the casing surface 11b of the top casing 10 has the surface 102A corresponding to the column A, the surface 102B corresponding to the column B, the surface 102C corresponding to the column C, the surface 102D corresponding to the column D, and the surface 102E corresponding to the column E. The surfaces 102A to 102E are thus formed in order from the third end side to the fourth end side in the row direction. The surfaces 102A to 102E each have holes 101. The surfaces 102A to 102E are flat surfaces parallel to the flat surface of the board 40. The surfaces 102A to 102E and the flat surface of the board 40 are parallel to each other. The surfaces 102A to 102E are flat in the column direction from the first end side toward the second end side.

The distances between the board 40 and the respective surfaces 102A to 102E in the vertical direction from the flat surface of the board 40 are as follows: surface 102E > surface 102D > surface 102C > surface 102B > surface 102A. That is, there is a step between a surface at the third end side and a surface at the fourth end side among the surfaces 102A to 102E such that the heights of the surfaces from the board 40 increase toward the fourth end side. Each of the surfaces 102A to 102E is formed such that the distance between each of the surfaces 102A to 102E and the flat surface of the board 40 in the vertical direction from the board 40 is substantially uniform in the column direction (the direction between the first end side and the second end side).

As shown in FIG.5, the nonwoven fabric sheet 50A is mounted (placed) on the surface 102A. The nonwoven fabric sheet 50B is mounted on the surface 102B. The nonwoven fabric sheet 50C is mounted on the surface 102C. The nonwoven fabric sheet 50D is mounted on the surface 102D. The nonwoven fabric sheet 50E is mounted on the surface 102E. In a normal state where the key tops 141 are not pressed, the flanges 141f of the key tops 141 each face one of the surfaces 102A to 102E with one of the nonwoven fabric sheets 50A to 50E inbetween.

The nonwoven fabric sheets 50A to 50E each have holes 501 as second through holes and notches 502. The holes 501 are arranged to correspond to the holes 101 of the top casing 10. Through the holes 101 and the holes 501, the key tops 141 are inserted. The notches 502 are formed between the adjacent holes 501 at the third end side or the fourth end side of the nonwoven fabric sheets 50A to 50E so as to extend inside the nonwoven fabric sheets 50A to 50E in the X-axis direction. The ribs 112 of the boss parts 110 and/or the ribs 122 of the rib parts 120 are fitted to the notches 502. By the boss parts 110 and/or the rib parts 120 fitted to the notches 502, the positions of the nonwoven fabric sheets 50A to 50E on the top casing 10 are determined.

The nonwoven fabric sheets 50A to 50E have a uniform structure (the same structure) made of the same material in the same thickness, for example. The separate nonwoven fabric sheets 50A to 50E are used instead of one sheet of nonwoven fabric, so that the contact area between the surfaces 102A to 102E, the nonwoven fabric sheets 50A to 50E, and the flanges 141f are widened. Further, the nonwoven fabric sheets 50A to 50E do not sag or bend when placed on the respective surfaces 102A to 102E.

As shown in FIG.2 and FIG.3, the touch surfaces 141t of the key tops 141 are parallel to the flat surface of the board 40. In the row direction, the key tops 141 of the keys 14A to 14E have the same moving length (stroke length), which is determined by the movable range of the rubber key tops 32 and the surfaces 102A to 102E (the nonwoven fabric sheets 50A to 50E). The rubber key tops 32 of the keys 14A to 14E have a uniform structure (the same structure) made of the same material in the same shape (mass).

In the row direction in FIG.6, the circles show possible contact points between the key tops 141 and the other parts when the key tops 141 of the keys 14A to 14E are pressed by the user. The pressed and elastically deformed rubber key tops 32 is omitted in FIG.6. The contact points are between the key tops 141 and the top edges of the casing surface 11a or the edges of the surfaces 102A to 102E. These contacts occur when the moving direction of the pressed key tops 141 is shifted from the vertical direction with respect to the flat surface of the board 40, for example. The contacts generate contact sounds.

However, as shown in FIG.2, the surfaces 102A to 102E of the top casing 10 are formed stepwise in the row direction, and the flanges 141f of the key tops 141 have stepwise heights. According to such a structure shown in FIG.2, there is a narrow gap between the moving surface 141S of each key top 141 and the hole lateral surface 101S, which faces the moving surface 141S, of the corresponding hole 101 in the top casing 10. The moving surface 141S of each key top 141 is at a predetermined angle (e.g., the degree of 1.5°) to the corresponding hole lateral surface 101S. The moving surface 141S may be substantially parallel to the corresponding hole lateral surface 101S. The moving direction of each key top 141 is perpendicular to the flat surface of the board 40. The hole lateral surfaces 101S are inner lateral surfaces of the holes 101. The positional relationship between the moving surface 141S and the hole lateral surface 101S in the row direction is uniform in all the columns A to E. In other words, the difference (the contact point distance "h" in FIG.6) between (i) the distance between a contact point of a key top 141 and the board 40 in the vertical direction from the flat surface of the board 40 and (ii) the distance between another contact point of the key top 141 and the board 40 in the vertical direction from the flat surface of the board 40 is the same among the key tops 141 in all the columns A to E. Thus, in the row direction, the user feels substantially the same operability for the keys 14A to 14E when pressing the key tops 141, and the contact sounds (keystroke sounds) are uniform among the keys 14.

The contact point distance "h" of the key 14E is equal to the contact point distance "h" of the key 14A. According to such a structure as exemplified in FIG.6, the speed of the key 14E immediately before hitting the other part is decreased, and the impact of the contact is decreased, as compared with a structure in which the key 14E has a longer hole lateral surface 101S, when the same part of the key 14E is pressed with the same force. Therefore, according to the structure in FIG.6, the contact sounds of the keys 14 are decreased.

The nonwoven fabric sheets 50A to 50E, which are separate from each other, are mounted on the stepwise surfaces 102A to 102E, so that the moving lengths of the respective key tops 141 are uniform. As a result, the operability of the keys 14A to 14E is substantially uniform in the row direction when the key tops 141 are pressed and return, and the contact sounds (keystroke sounds) of the keys 14 are equalized among the keys 14. The calculator 1 may not include the nonwoven fabric sheet(s).

In the column direction, the heights of the touch surfaces 141t from the casing surface 11a are substantially the same among the key tops 141 of the keys 14F to 14K. Further, among the keys 14F to 14K, the heights of the key tops 141 themselves in the vertical direction from the board 40 are substantially the same, and the heights of the flanges 141f in the vertical direction from the flat surface of the board 40 are substantially the same. Therefore, in the column direction, the heights of the touch surfaces 141t of the keys 14F to 14K from the flat surface of the board 40 are substantially the same regardless of the angle Θ2.

The key tops 141 of the keys 14F to 14K have the same moving length, which is determined by the movable range of the rubber key tops 32 and the surfaces 102A to 102E (and the nonwoven fabric sheets 50A to 50E). The rubber key tops 32 of the keys 14F to 14K have a common structure (the same structure) made of the same material in the same shape (mass) . In the column direction, the moving surface 141S is parallel to the hole lateral surface 101S with a predetermined distance inbetween, and this positional relationship between the moving surface 141S and the hole lateral surface 101S is uniform in all the rows. Thus, in the column direction, the operability is substantially the same among the keys 14F to 14K, and the contact sounds (keystroke sounds) of the keys 14F to 14K are equalized.

As described above, according to the embodiment, a calculator 1 includes keys 14 and a top casing 10. The top casing 10 has surfaces 102A to 102E parallel to each other, and the surfaces 102A to 102E each have at least one first through hole 101. The keys 14 are inserted to the corresponding first through holes 101. The top casing 10 has a first end side, a second end side, a third end side, and a fourth end side, the first end side being opposite the second end side, the third end side being perpendicular to the first end side and opposite the fourth end side. The surfaces 102A to 102E of the top casing 10 are flat from the first end side toward the second end side. The top casing 10 has a step between a surface on the third end side and a surface on the fourth end side.

Thus, the keys 14 are arranged on the surfaces 102a to 102E. According to such a structure, the difference in operability is reduced among the keys 14, which are arranged to be flat in the direction between the first and second end sides and to be stepwise in the direction between the third and fourth end sides.

The calculator 1 further includes nonwoven fabric sheets 50A to 50E mounted on the respective surfaces 102A to 102E. The nonwoven fabric sheets 50A to 50E have second through holes 501 corresponding to the first through holes 101 of the surfaces 102A to 102E. According to the above structure, the nonwoven fabric sheets 50A to 50E, which are separate from each other to correspond to the surfaces 102A to 102E, can be precisely positioned on the surfaces 102A to 102E, which have steps inbetween in the direction between the third and fourth end sides. Further, the key tops 141 can be inserted through the holes 101, 501. Further, sagging or bending of the nonwoven fabric sheets 50A to 50E can be prevented, as compared with a known art.

Further, the keys 14 each have a flange 141f. The flanges 141f are mounted to face the corresponding surfaces 102A to 102E with the corresponding nonwoven fabric sheets 50A to 50E inbetween. According to the above structure, the direct contacts of the keys 14 against the surfaces 102A to 102E are avoided when the pressed keys 14 return, and the keystroke sounds of the keys 14 are reduced, as compared with a known art. Further, the contact area between the surfaces 102A to 102E, the nonwoven fabric sheets 50A to 50E, and the flanges 141f is widened, as compared with a known art.

Further, the top casing 10 of the calculator 1 includes boss parts 110 each having a boss 111 and rib parts 120 each having a support 121. The boss parts 110 and the rib parts 120 each extend over two surfaces among the surfaces 102A to 102E. The boss parts 110 each have ribs 112 that protrude in directions perpendicular to a direction in which the boss 111 protrudes. The rib parts 120 each have ribs 122 that protrude in directions perpendicular to a direction in which the support 121 protrudes. The ribs 112 each protrude in the directions perpendicular to each other. The ribs 122 each protrude in the directions perpendicular to each other. The ribs 112, 122 are fitted to notches 502 formed in the nonwoven fabric sheets 50A to 50E. By the boss parts 110 and the rib parts 120, the positions of the nonwoven fabric sheets 50A to 50E can be precisely determined and fixed on the surfaces 102A to 102E.

Further, a positional relationship between a moving surface 141S of a key 14 on the third end side and a hole lateral surface 101S of the corresponding first through hole 101 is identical to a positional relationship between a moving surface 141S of a key 14 on the fourth end side and a hole lateral surface 101S of the corresponding first through hole 101. According to the above structure, the operability of the keys 14 can be made uniform from the third end side to the fourth end side, and the keystroke sounds of the keys 14 can be equalized, as compared with a known art.

The above-described embodiment is an example of the key input device according to the present disclosure and is not intended to limit the present disclosure.

For example, although the electronic device is the calculator 1 in the above embodiment, the electronic device is not limited to a calculator. The electronic device may be a device other than a calculator that has keys arranged stepwise and that is used with one hand of the user for key inputs, for example. More specifically, the electronic device may be a remote controller of various kinds of devices, a handy terminal, an external numeric keypad for a personal computer (PC), and a device for inputting PIN numbers, for example.

Although the ribs 112 of the boss parts 110 and the ribs 122 of the rib parts 120 extend beyond the crossing regions 11c (enclosed by the dashed line (virtual line) in FIG.4), the present disclosure is not limited to such a structure. The ribs 112 of the boss parts 110 and the ribs 122 of the rib parts 120 may be within the crossing regions 11c (enclosed by the dashed line (virtual line) in FIG.4), for example. That is, the boss parts 110 and the rib parts 120 each protrude so as not to reach a virtual plane (the vertical dashed line in FIG.4) that is in contact with the cross section of the edges of the holes 101 in the row direction (the direction from the third end side to the fourth end side). Further, the boss parts 110 and the rib parts 120 may each protrude so as not to reach a virtual plane (the lateral dashed line in FIG.4) that is in contact with the cross section of the edges of the holes 101 in the column direction (the direction from the first end side to the second end side). The above two structures may be combined. According to the above structure, the ribs 112, 122 do not have parts that contribute to sound reflection, such as ribs on the key pitch regions 11p, as compared with a known art. Therefore, the stroke sounds of the key tops 141 are reduced, as compared with the known calculator.

Although an embodiment of the present disclosure has been described, the scope of the present disclosure is not limited to the embodiment described above but encompasses the scope of the disclosure recited in the claims and the equivalent thereof.

## Claims

1. A key input device (1) comprising:
keys (14); and
a member (10) having surfaces (102A, 102B, 102C, 102D, 102E) parallel to each other, the surfaces each having at least one first through hole (101) among first through holes (101), wherein
the keys are inserted to the corresponding first through holes;
the member has a first end side, a second end side, a third end side, and a fourth end side, the first end side being opposite the second end side, the third end side being perpendicular to the first end side and opposite the fourth end side;
the surfaces of the member are flat from the first end side toward the second end side; and
the member has a step between a surface on the third end side and a surface on the fourth end side among the surfaces.

2. The key input device according to claim 1, further comprising sheets (50A, 50B, 50C, 50D, 50E) mounted on the respective surfaces and having second through holes (501) corresponding to the first through holes of the surfaces.

3. The key input device according to claim 2, wherein each of the keys has a flange (141f) configured to face a corresponding surface among the surfaces with a corresponding sheet among the sheets inbetween.

4. The key input device according to claim 2, further comprising projection parts (110, 120) each having a support (111, 121) and ribs (112, 122), wherein
the projection parts each extend over two surfaces among the surfaces;
the ribs protrude in directions perpendicular to a direction in which the support protrudes;
the ribs protrude in the directions perpendicular to each other; and
the ribs are fitted to notches (502) formed in the sheets.

5. The key input device according to any one of claims 1 to 4, wherein a positional relationship between a moving surface (141S) of a key (14) on the third end side and a lateral surface (101S) of a first through hole (101) corresponding to the key on the third end side is identical to a positional relationship between a moving surface (141S) of a key (14) on the fourth end side and a lateral surface (101S) of a first through hole (101) corresponding to the key on the fourth end side.
